# EUROPEAN PATENT APPLICATION

(11) **EP 2 750 038 A2**
(43) Date of publication of application: **02.07.2014**
(21) Application number: 13189000.6
(22) Date of filing: 16.10.2013
(51) Int. Cl.: G06F 9/50, G06F 9/455

(54) **Computing device and computing method**

(30) Priority: 28.12.2012 TW 101150815
(71) Applicant: Hon Hai Precision Industry Co., Ltd., New Taipei City (TW)
(72) Inventor: Peng, Kuan-Chiao, New Taipei (TW); Yeh, Chien-Fa, New Taipei (TW); Lee, Chung-I, New Taipei (TW); Lin, Yen-Hung, New Taipei (TW)
(74) Representative: Gray, John James

(57) **Abstract**

In a computing method executed by a computing device, one or more computing environments are created for each virtual machine installed in the computing device (S301). Data are received from a client computer, a mathematical operation to process the data is determined (S302). A computing environment corresponding to the certain mathematical operation and virtual machine that has the determined computing environment are determined (S303). The determined virtual machine is directed to enter the determined computing environment and perform the mathematical operation on the data (S304). A computing result is obtained from the determined virtual machine and outputted to the client computer (S305).

## Description

### Field

Embodiments of the present disclosure relate to virtual machine technology, and particularly to a computing device and a computing method.

### BackGround

In virtual machine technology, a plurality of virtual machines (VMs) may be installed in a computing device. To provide special computing services to users, certain computing programs need to be installed in the computing device. A user has to update the computing programs if different computing services are requested. However, updating the computing programs may be time-consuming and sometimes inconvenient.

### Summary

According to one aspect of the disclosure, a computing method of a computing device is provided. The method includes: creating one or more computing environments for each virtual machine installed in the computing device, and storing the computing environments in a storage system, each of the computing environments representing a mathematical operation executable by the virtual machine; receiving data from a client computer, and determining a certain mathematical operation to process the data; determining a computing environment corresponding to the certain mathematical operation, and determining a virtual machine that has the determined computing environment; directing the determined virtual machine to enter the determined computing environment and perform the certain mathematical operation on the data, and obtaining a computing result from the determined virtual machine; and outputting the computing result to the client computer.

### BRIEF DESCRIPTION OF THE DRAWINGS

Embodiments of the invention are described, by way of example only, with reference to the accompanying drawings, in which:

FIG. 1 is one embodiment of an application of a computing device including a computing system.

FIG. 2 is a block diagram of one embodiment of function modules of the computing system in FIG. 1.

FIG. 3 is a flowchart of one embodiment of a computing method.

### DETAILED DESCRIPTION

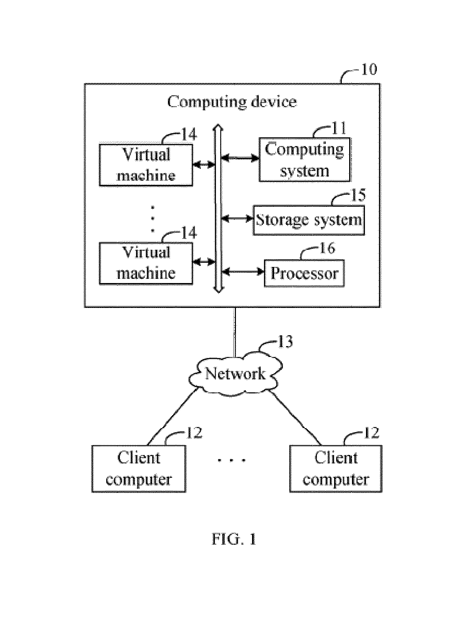

FIG. 1 is one embodiment of an application of a computing device 10 including a computing system 11. The computing device 10 is connected to a plurality of client computers 12 through a network 13. One or more virtual machines 14 are installed in the computing device 10 to provide computing services to users. The computing system 11 implements different mathematical operations by changing computing environments of the virtual machines 14 according to user requirements. The network 13 can be a public network or a private network.

In this embodiment, the computing device 10 further includes a storage system 15 and at least one processor 16. The storage system 15 can be a dedicated memory, such as an erasable programmable read only memory (EPROM), a hard disk drive (HDD), or flash memory. In some embodiments, the storage system 15 can be an external storage device, such as an external hard drive, a storage card, or a data storage medium.

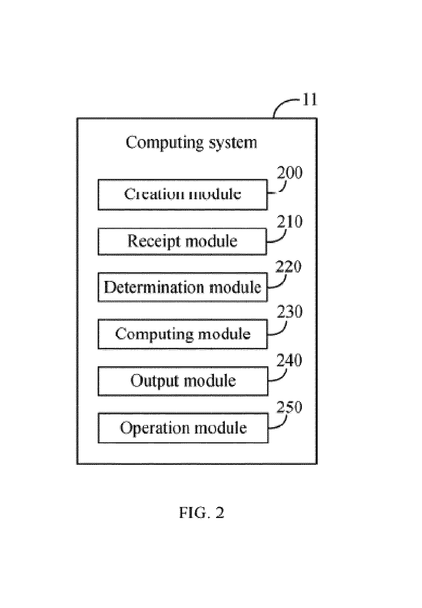

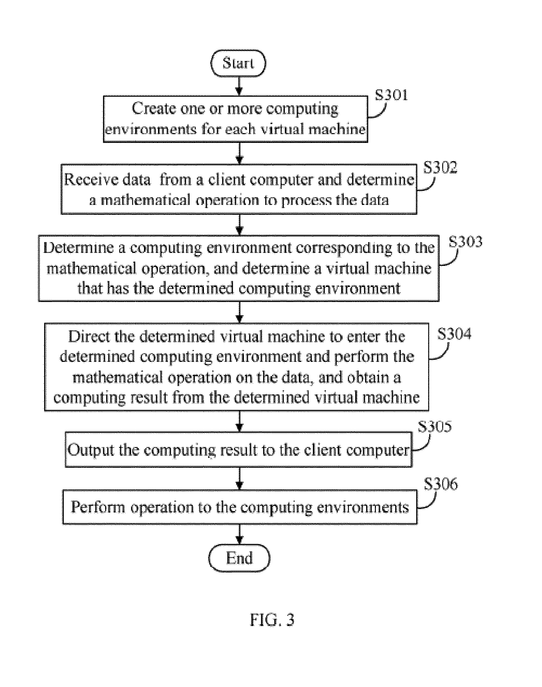

FIG. 2 is a block diagram of one embodiment of function modules of the computing system 11 in FIG. 1. The computing system 11 includes a creation module 200, a receipt module 210, a determination module 220, a computing module 230, an output module 240, and an operation module 250. The modules 200-250 may comprise computerized code in the form of one or more programs that are stored in the storage system 15. The computerized code includes instructions that are executed by the at least one processor 16, to provide the aforementioned functions of the computing system 11. A detailed description of the functions of the modules 200-250 is given in reference to FIG. 3.

FIG. 3 is a flowchart of one embodiment of a computing method of the computing device of FIG. 1. Depending on the embodiment, additional steps may be added, others removed, and the ordering of the steps may be changed.

In step S301, the creation module 200 creates one or more computing environments for each virtual machine 14 installed in the computing device 10, and stores the computing environments in the storage system 15. Each of the computing environments represents a mathematical operation executable by the virtual machines 14. In one embodiment, the creation module 200 creates the computing environments of the virtual machines 14 by creating virtual machine snapshots for the virtual machines 14. A virtual machine snapshot is a file-based snapshot of a state, disk data, and configuration of a virtual machine 14 at a specific time. For example, three virtual machines 14 denoted as 14A, 14B, and 14C are installed in the computing device 10. Three virtual machine snapshots denoted as S1, S2, and S3 are created for the virtual machines 14A. Two virtual machine snapshots denoted as S4 and S5 are created for the virtual machines 14B. Three virtual machine snapshots denoted as S6, S7, and S8 are created for the virtual machines 14C. The virtual machine snapshot S1 represents an addition operation. The virtual machine snapshot S2 represents an average value operation. The virtual machine snapshot S3 represents a multiplication operation. The virtual machine snapshot S4 represents a sum of squares operation. The virtual machine snapshot S5 represents a square root operation. The virtual machine snapshot S6 represents a logarithm operation. The virtual machine snapshot S7 represents a minimum operation. The virtual machine snapshot S8 represents a maximum operation.

In step S302, the receipt module 210 receives data from one of the client computers 12, and determines a certain mathematical operation to process the data. In one embodiment, the receipt module 210 provides a user interface for a user to input the data and select the mathematical operation to process the data. For example, the user inputs a set of data [1, 2, 3, 4, 5, 6, 7, 8, 9, 10] and selects an average value operation to process the set of data via one of the client computers 12.

In step S303, the determination module 220 determines a computing environment corresponding to the certain mathematical operation, and determines a virtual machine 14 that has the determined computing environment. In this embodiment, the determination module 220 determines a virtual machine snapshot corresponding to the certain mathematical operation. As mentioned above, the receipt module 210 receives the set of data [1, 2, 3, 4, 5, 6, 7, 8, 9, 10] and determines the average value operation to process the set of data. The determination module 220 then determines the virtual machine snapshot S2 corresponding to the average value operation, and determines the virtual machine 14A that has the virtual machine snapshot S2.

In step S304, the computing module 230 directs the determined virtual machine 14 to enter the determined computing environment and perform the certain mathematical operation on the data, and obtains a computing result from the determined virtual machine 14. In this embodiment, the computing module 230 directs the determined virtual machine 14 to enter the determined computing environment by applying the determined virtual machine snapshot to the determined virtual machines 14. For example, in step S303, the determination module 220 determines the virtual machine snapshot S2 for the determined virtual machine 14A. The computing module 230 applies the virtual machine snapshot S2 to the virtual machine 14A. The virtual machine 14A performs the average value operation to process the data in the determined computing environment and outputs the computing result.

In step S305, the output module 240 outputs the computing result to the client computer 12. For example, the output module 240 outputs the average value of the set of data [1, 2, 3, 4, 5, 6, 7, 8, 9, 10] to the client computer 12.

In step S306, the operation module 250 performs operations to the computing environments that are stored in the storage system 15. The operations to the computing environments include a creation operation, a modification operation, and a deletion operation. For example, the operation module 250 performs a deletion operation to a computing environment of the virtual machines 14C.

While specific embodiments of the invention have been described above, it is to be understood that the embodiments described herein can be implemented in hardware, software, firmware, middleware, microcode, or any combination thereof. For example, the invention may take the form of a computer program containing one or more sequences of machine-readable instructions which, when executed by a computer, causes the computer to perform one or more method described above.

When the embodiments are implemented in software, firmware, middleware or microcode, program code or code segments, they can be stored in a machine-readable medium, such as a storage component. The term "machine-readable medium" can include, without being limited to, wireless channels and various other media capable of storing, containing, and/or carrying instruction(s) and/or data. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. All of the processes described above may be embodied in, and fully automated via, functional code modules executed by one or more general purpose electronic devices or processors. The code modules may be stored in any type of non-transitory machine-readable medium or other storage device. Some or all of the methods may alternatively be embodied in specialized hardware. Depending on the embodiment, the non-transitory machine-readable medium may be a hard disk drive, a compact disc, a digital video disc, a tape drive or other suitable storage medium.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A computing method of a computing device being executed by a processor of the computing device, the method comprising:
creating one or more computing environments for each virtual machine installed in the computing device, and storing the computing environments in a storage system, each of the computing environments representing a mathematical operation executable by the virtual machine;
receiving data from a client computer, and determining a certain mathematical operation to process the data;
determining a computing environment corresponding to the certain mathematical operation, and determining a virtual machine that has the determined computing environment;
directing the determined virtual machine to enter the determined computing environment and perform the certain mathematical operation on the data, and
obtaining a computing result from the determined virtual machine; and
outputting the computing result to the client computer.

2. The method of claim 1, further comprising:
performing operations to the computing environments that are stored in the storage system.

3. The method of claim 2, wherein the operations to the computing environments comprise a creation operation, a modification operation, and a deletion operation.

4. The method of claim 1, 2 or 3, wherein the computing environments of the virtual machines are created by creating virtual machine snapshots for the virtual machines.

5. A computing device, comprising:
at least one processor; and
a storage system storing a plurality of instructions, when executed by the at least one processor, causing the at least one processor to perform operations comprising:
creating one or more computing environments for each virtual machine installed in the computing device, and storing the computing environments in the storage system, each of the computing environments representing a mathematical operation executable by the virtual machines;
receiving data from a client computer, and determining a certain mathematical operation to process the data;
determining a computing environment corresponding to the certain mathematical operation, and determining a virtual machine that has the determined computing environment;
directing the determined virtual machine to enter the determined computing environment and perform the certain mathematical operation on the data, and obtaining a computing result from the determined virtual machine; and
outputting the computing result to the client computer.

6. The computing device of claim 5, wherein the instructions further cause the at least one processor to perform operations comprising:
performing operations to the computing environments that are stored in the storage system.

7. The computing device of claim 6, wherein the operations to the computing environments comprise a creation operation, a modification operation, and a deletion operation.

8. The computing device of claim 5, 6 or 7, wherein the computing environments of the virtual machines are created by creating virtual machine snapshots for the virtual machines.

9. A storage medium having stored thereon instructions that, when executed by a processor of a computing device, causes the processor to perform a computing method of the computing device, the method comprising:
creating one or more computing environments for each virtual machine installed in the computing device, and storing the computing environments in a storage system, each of the computing environments representing a mathematical operation executable by the virtual machines;
receiving data from a client computer, and determining a certain mathematical operation to process the data;
determining a computing environment corresponding to the certain mathematical operation, and determining a virtual machine that has the determined computing environment;
directing the determined virtual machine to enter the determined computing environment and perform the certain mathematical operation on the data, and obtaining a computing result from the determined virtual machine; and
outputting the computing result to the client computer.

10. The storage medium of claim 9, wherein the method further comprising:
performing operations to the computing environments that are stored in the storage system.

11. The storage medium of claim 10, wherein the operations to the computing environments comprise a creation operation, a modification operation, and a deletion operation.

12. The storage medium of claim 9, 10 or 11, wherein the computing environments of the virtual machines are created by creating virtual machine snapshots for the virtual machines.
